# EUROPÄISCHE PATENTSCHRIFT

(11) **EP 3 364 547 B1**
(45) Veröffentlichungstag und Bekanntmachung des Hinweises auf die Patenterteilung: **29.07.2020**
(21) Anmeldenummer: 17157143.3
(22) Anmeldetag: 21.02.2017
(51) Int. Cl.: H04B 3/54, H02J 13/00

(54) **VERFAHREN UND SYSTEM ZUR DATENÜBERTRAGUNG ÜBER EINE HOCH- ODER MITTELSPANNUNGSLEITUNG**
METHOD AND SYSTEM FOR DATA TRANSMISSION OVER A HIGH OR MEDIUM VOLTAGE LINE
PROCÉDÉ ET SYSTÈME POUR LA TRANSMISSION DE DONNÉES SUR UNE LIGNE DE MOYEN TENSION OU HAUTE TENSION

(43) Veröffentlichungstag der Anmeldung: 22.08.2018
(73) Patentinhaber: Siemens Aktiengesellschaft, 80333 München (DE)
(72) Erfinder: Kussyk, Jaroslaw, 1170 Wien (AT)

(56) Entgegenhaltungen:
- CH-A- 434 427

## Beschreibung

Bei der Trägerfrequenz-Nachrichtenübertragung über Hochspannungsleitungen (TFH) zwischen zwei oder mehreren TFH-Vorrichtungen werden primäre Frequenzkanäle für die Übertragung von Sprach- und Fernwirkdaten verwendet. Für die Übertragung von modulierten (Hochspannungsleitungs-) Schutzsignalen zwischen jeweils zwei Leitungsschutzvorrichtungen werden zusätzlich separate sekundäre Frequenzkanäle verwendet. Dabei werden die Schutzsignale in der Regel mit einer erhöhten Leistung übertragen.

Beispielsweise wird für die Kodierung der Schutzbefehlsübertragung oft eine Mehrfrequenztastung (M-FSK) eines Trägers verwendet. Im Ruhezustand beider Leitungsschutzvorrichtungen findet keine Schutzbefehlsübertragung statt, was durch das Aussenden eines ungetasteten/unmodulierten Schutzsignals durch jede der beiden Schutzvorrichtungen der jeweiligen Partnerschutzvorrichtung signalisiert wird. Zur automatischen Signalisierung, Steuerung und /oder Anpassung der Übertragung von Sprach- und Fernwirkdaten in den primären Frequenzkanälen ist in der Regel je Übertragungsrichtung ein Signalisierungskanal für den Austausch von Zusatzinformationen notwendig. Ein solcher Signalisierungskanal soll eine robustere Übermittlung von Zusatzinformationen bieten. Der Austausch von Zusatzinformationen über die Signalisierungskanäle erfolgt mittels eines Primärkanalkennsignals oder einer Primärkanalkennmeldung.

Üblicherweise werden für solche Signalisierungskanäle logische Kanäle innerhalb der primären Frequenzkanäle verwendet, was eine geringere Nutzung der primären Frequenzkanäle verursacht.

Aus der Schrift CH 434 427 A ist beispielsweise eine Schaltungsanordnung zum Übertragen von Schaltsignalen, Fernwirksignalen und Sprache über Hochspannungsleitungen bekannt, welche für die Übertragung ein Frequenzstufenverfahren mit n-Stufen nutzt. Dabei werden die zu übertragenden Signale bzw. Sprache senderseitig jeweils bestimmten Frequenzen zugeordnet und empfängerseitig wieder in Einzelsignalbänder aufgeteilt, wobei mittels einer vorgegebenen Amplitudenschwelle im Übertragungsband der n Frequenzstufen, aber außerhalb des Einzelsignalbandes der jeweils gesendeten Frequenz liegende Störschwingungen bewertet und gesperrt werden. Weiterhin wird bei der in der Schrift CH 434 427 A beschriebenen Schaltanordnung eine so genannte Ruhefrequenz, welche für das Senden von Schutzsignalen vorgesehen ist und welche außerhalb des Übertragungsbandes für Fernwirksignale bzw. Sprache liegt, zum Übertragen von Zusatzinformation - z.B. bei der Sprachübertragung als Pilot für die Amplitudenregelung der Sprache und/oder zum Übermitteln von Wahlimpulsen für Fernsprechen genutzt.

Ausgehend von bekannten Verfahren zur Datenübertragung über eine Hoch- oder Mittelspannungsleitung stellt sich an die Erfindung die Aufgabe, ein Verfahren anzugeben, mit dem eine vergleichsweise höhere Datenübertragungsrate bei verbesserter Qualität der Datenübertragung erreicht wird.

Die Erfindung löst diese Aufgabe durch ein Verfahren gemäß Anspruch 1.

Zur Lösung des oben erwähnten Problems wird eine Methode vorgeschlagen, die Übertragung von Zusatzinformationen zur automatischen Signalisierung, Steuerung und /oder Anpassung der Übertragung von Sprache und Fernwirknachrichten über die primären Frequenzkanäle mit der robusteren Übertragung von (Hochspannungsleitungs-) Schutzsignalen in sekundären Frequenzkanälen kombiniert.

Dabei wird als Zusatzdaten eine Primärkanalkennmeldung, die verfügbare primäre Frequenzkanäle festlegt, übertragen. Dies hat den Vorteil, dass Informationen zu den am besten zur Datenübertragung geeigneten primären Frequenzkanälen ausgetauscht werden können, ohne Datenübertragungskapazität der primären Frequenzkanäle zu verbrauchen. Die Datenübertragungsrate wird erhöht.

In einer bevorzugten Ausführungsform des erfindungsgemäßen Verfahrens wird der Schutzsignal-Frequenzkanal mit einer höheren Sendeamplitude als der jeweiligen Sendeamplitude der primären Frequenzkanäle betrieben. Hieraus ergibt sich der Vorteil, dass eine besonders zuverlässige Datenübertragung für die Zusatzdaten sichergestellt wird.

In einer weiteren bevorzugten Ausführungsform des erfindungsgemäßen Verfahrens werden als Zusatzdaten Signalempfangsqualitätsinformationen übertragen, die mindestens eine der folgenden Informationen aufweisen: Empfangspegel, Signal-zu-Rauschen Verhältnis, geschätzte Bitfehlerrate. Dies hat den Vorteil, dass Sender und Empfänger auf besonders geeignete Parameter für eine zuverlässige und schnelle Datenübertragung eingestellt werden.

In einer weiteren bevorzugten Ausführungsform des erfindungsgemäßen Verfahrens erfolgt die Datenübertragung über eine erste Phase der Hoch- oder Mittelspannungsleitung. Dies hat den Vorteil, dass Sender und Empfänger sich direkt über eine elektrische Verbindung austauschen.

In einer weiteren bevorzugten Ausführungsform des erfindungsgemäßen Verfahrens erfolgt eine weitere Datenübertragung über eine zweite Phase der Hoch- oder Mittelspannungsleitung, wobei ein Übersprechen der Datenkommunikation zwischen beiden Phasen erfolgt, wobei auf beiden Phasen verfügbare primäre Frequenzkanäle derart festlegt werden, dass keine Störung der jeweils anderen Phase bei der Datenübertagung entsteht. Dies hat den Vorteil, dass sich Sender und Empfänger auf unterschiedlichen Phasen einer Leitung nicht gegenseitig stören. Es werden für die jeweilige Phase primäre Frequenzkanäle festgelegt, die die primären Frequenzkanäle der jeweils anderen Phase nicht stören. Hierdurch wird die Zuverlässigkeit insbesondere bei komplexen Datenübertragungssystemen in einem Energieverteilungsnetz erhöht.

In einer weiteren bevorzugten Ausführungsform des erfindungsgemäßen Verfahrens wird für den Schutzsignal-Frequenzkanal als Datenübertragungsmethode frequency shift keying eingesetzt, wobei Signale außerhalb eines vorher festgelegten Frequenzbereichs als ein Schutzsignal und Signale innerhalb des vorher festgelegten Frequenzbereichs als Zusatzdaten verarbeitet werden. Hierdurch kann der Schutzsignal-Frequenzkanal besonders einfach einerseits zum Übertragen von Schutzsignalen und andererseits zum Übertragen von Zusatzdaten verwendet werden.

Ferner stellt sich ausgehend von bekannten Systemen zur Datenübertragung über eine Hoch- oder Mittelspannungsleitung an die Erfindung die Aufgabe, ein System anzugeben, mit dem eine vergleichsweise höhere Datenübertragungsrate bei verbesserter Qualität der Datenübertragung erreicht wird.

Die Erfindung löst diese Aufgabe durch ein System gemäß Anspruch 7. Bevorzugte Ausführungsformen sind in den Ansprüchen 8 bis 13 beschrieben. Es ergeben sich dabei für das System und seine Ausführungsformen sinngemäß die gleichen Vorteile wie eingangs für das erfindungsgemäße Verfahren erläutert.

Im Folgenden soll ein Ausführungsbeispiel der Erfindung näher erläutert werden.

Bei dem erfindungsgemäßen Verfahren wird ein unmoduliertes Schutzsignal in einem sekundären Frequenzkanal, das für die Signalisierung des Ruhezustandes einer Leitungsschutzvorrichtung (es findet keine Schutzbefehlsübertragung statt) von einer Leitungsschutzvorrichtung zu mindestens einer zweiten Leitungsschutzvorrichtung gesendet wird, zusätzlich für die Übertragung einer Primärkanalkennmeldung verwendet. Die Übertragung einer Primärkanalkennmeldung erfolgt von einer ersten TFH-Vorrichtung zu einer zweiten TFH-Vorrichtung, mit der die erste TFH-Vorrichtung über die primären Frequenzkanäle kommuniziert. Von der ersten TFH-Vorrichtung wird die Primärkanalkennmeldung zu einer oder mehreren weiteren TFH-Vorrichtung(en) eines oder mehrere TFH-Verbindungen umfassenden TFH-Netzwerks weitergeleitet.

Die Übertragung der Primärkanalkennmeldung ist notwendig für:
1. die Signalisierung, Steuerung und /oder Anpassung der Signal-/Datenübertragung über die primären Frequenzkanäle einer TFH-Verbindung zwischen einer ersten TFH-Vorrichtung zu einer zweiten TFH-Vorrichtung;
2. die weitere Verwendung der vorgenannten Signalisierung an die eine oder mehrere weitere TFH-Vorrichtung(en) eines eine/mehrere TFH-Verbindungen umfassenden TFH-Netzwerks (z. B. zum Zweck der Abstimmung der Frequenznutzung und/oder Frequenzwiederverwendung mit der einen oder mehreren weitere TFH-Vorrichtung(en)).
Somit ermöglicht die Übertragung der Zusatzdaten wie etwa der Primärkanalkennmeldung eine verbesserte Abstimmung einer Vielzahl von Kommunikationsgeräten, so dass Störungen vermindert und die Datenübertragungsrate und Datenübertragungsqualität gesteigert werden.

Um dies zu erreichen, werden das Schutzsignal bzw. die Schutzsignalmeldung von der Schutzvorrichtung und das Primärkanalkennsignal bzw. die Primärkanalkennsignalmeldung von der TFH-Vorrichtung einer weiteren Signalisierungssendevorrichtung übergeben, die dann beide Signale kombiniert. Das Kombinationssignal wird moduliert und über den sekundären Frequenzkanal, also über den Schutzsignal-Frequenzkanal, ausgesendet.

Dies soll so erfolgen, dass eine Signalisierungsempfangsvorrichtung aus dem empfangenen Kombinationssignal das entsprechende Schutzsignal vom Primärkanalkennsignal und vom primären Frequenzkanal unterscheiden kann. Die unterschiedlichen Signalanteile können dann beim Empfänger z.B. einer Schutzvorrichtung zur Verarbeitung des Schutzsignals übergeben werden.

Die primären und die sekundären Frequenzkanäle können im Frequenzbereich zumindest einseitig aneinander grenzen oder verschachtelt sein. Außerdem können die primären Kanäle im Frequenzbereich zumindest teilweise überlappen, wenn die Dämpfung zwischen ihnen aufgrund räumlicher Distanz ausreichend groß ist.

Ferner kann das Primärkanalkennsignal folgende Zusatzinformationen zur automatischen Signalisierung aufweisen, um die Anpassung der Übertragung von Sprach- und Fernwirkdaten in den primären Frequenzkanälen zu ermöglichen:
- Angaben zu einem oder mehreren Sende- /Empfangsfrequenzbändern bzw. -übertragungsmodi, die die Signalisierungssendevorrichtung und/oder ev. eine oder mehrere andere mit der Signalisierungssendevorrichtung verbundene Signalisierungsempfangsvorrichtung(en) verwenden (z. B. untere/obere Grenzfrequenz, Mittenfrequenz, Bandbreite, minimale Bandbreite, Vorzugsmittenfrequenz, Frequenzbandkennung, Sende-, Empfangspegel, Modulations-, Kanalkodierungsart, Meldungsformat u. Ä.);
- Angaben zu einem oder mehreren Sende- /Empfangsfrequenzbändern bzw. -übertragungsmodi, die die TFH-Vorrichtung und/oder ev. eine oder mehrere anderen mit der TFH-Vorrichtung verbundenen TFH-Vorrichtung(en) in den primären Frequenzkanälen verwenden (z. B. untere/obere Grenzfrequenz, Mittenfrequenz, Bandbreite, minimale Bandbreite, Vorzugsmittenfrequenz, Frequenzbandkennung, Sende-, Empfangspegel, Modulations-, Kanalkodierungsart, Meldungsformat, aktuelle Übertragungsrate u. Ä.);
- Angaben zu einem oder mehreren Sende- /Empfangsfrequenzbändern bzw. -übertragungsmodi, die die TFH-Vorrichtung und/oder andere mit der TFH-Vorrichtung verbundenen TFH-Vorrichtungen zur Verwendung als primäre Frequenzkanäle vorgesehen haben. Die Angaben sind beispielsweise: untere/obere Grenzfrequenz, Mittenfrequenz, Bandbreite, minimale Bandbreite, Vorzugsmittenfrequenz, Frequenzbandkennung, Sende-, Empfangspegel, Modulations-, Kanalkodierungsart, vorgesehenen planmäßigen Übertragungsrate;
- Identifikationsnummern/Kennungen der TFH-Vorrichtung und ev. einer oder mehrerer anderen mit der TFH-Vorrichtung verbundenen TFH-Vorrichtungen;
- Angaben zum Betriebszustand der TFH-Vorrichtung und ev. einer oder mehrerer anderen mit der TFH-Vorrichtung verbundenen TFH-Vorrichtungen;
- Zeitstempel, Synchronisationszeichen, Identifikationsnummer der Sendevorrichtung, Identifikationsnummer der Partnervorrichtung und /oder einer anderen Empfangsvorrichtung, Vorzugssubkanal/-frequenz, Identifikationsnummer eines sog. "Medium Access Request Channel (MARC)".

Weiterhin kann eine TFH-Vorrichtung eingerichtet sein, über die primären Frequenzkanäle mit einer oder mehreren anderen mit der TFH-Vorrichtung verbundenen TFH-Vorrichtungen (bzw. Partner-TFH-Vorrichtungen) fixe Kommunikationsverbindungen aufrechtzuerhalten. Die TFH-Vorrichtung kann die von ihren Partner-TFH-Vorrichtungen über sekundäre Frequenzkanäle mittels Primärkanalkennsignalen empfangenen Zusatzinformationen an andere TFH-Vorrichtungen weitergeben.

Bei einer Duplex-Übertragung zwischen zwei TFH-Vorrichtungen enthält eine solche Vorrichtung zumindest einen Sender für einen Primärkanal PTA, einen Empfänger für einen weiteren Primärkanal PRB, einen Sender für einen Sekundärkanal STA und einen Empfänger für einen weiteren Sekundärkanal PRB. Die mit der TFH-Vorrichtung verbundene Partner-TFH-Vorrichtung enthält dementsprechend einen Empfänger für den Primärkanal PRA, einen Sender für den Primärkanal PTB, einen Empfänger für den Sekundärkanal PRA bzw. einen Sender für den Sekundärkanal STB. Außerdem können die beiden TFH-Vorrichtungen zusätzlich einen oder mehrere Empfänger für weitere Sekundärkanale SRC, SRD, SSRE, SRF usw. enthalten.

Eine Signalisierungssendevorrichtung und eine Signalisierungsempfangsvorrichtung können entweder eigenständig als separate Baugruppen oder miteinander kombiniert vorgesehen werden. Ferner kann eine Kombination mit einer TFH-Vorrichtung und/oder einer Schutzvorrichtung vorgesehen sein.

Zur besseren Erläuterung der Erfindung zeigen in schematischer Darstellung die
- Figur 1: ein erstes System zur Datenübertragung über eine Hoch- oder Mittelspannungsleitung, und
- Figur 2: ein Frequenzspektrum für die Datenübertagung, und
- Figur 3: ein zweites System zur Datenübertragung über eine Hoch- oder Mittelspannungsleitung.

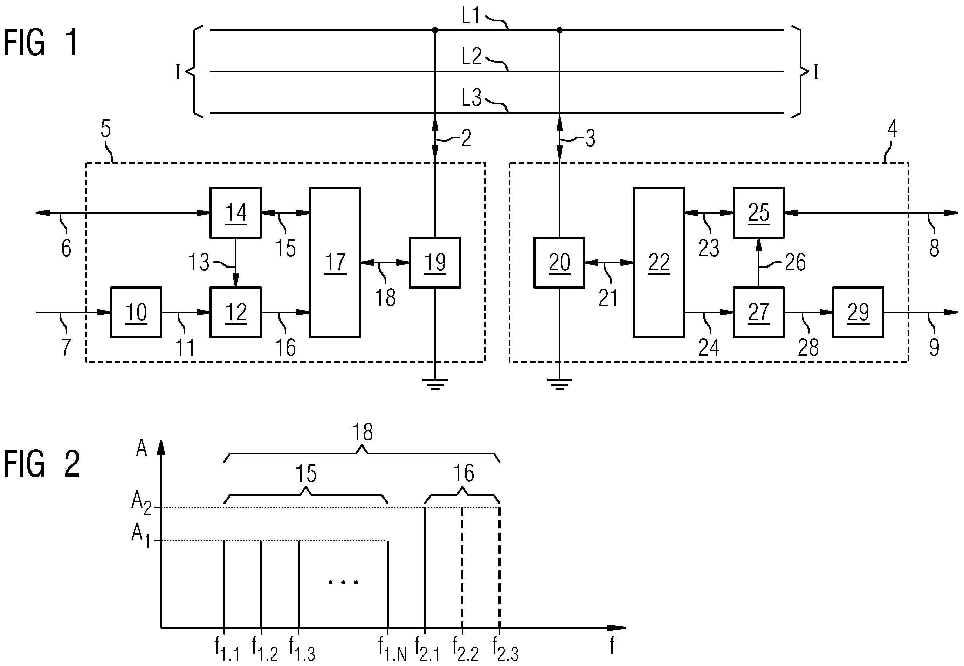

Ein mögliches Ausführungsbeispiel eines Systems zur Nutzung von Schmalbandschutzsignalen für die Datenübertragung und Steuerung von TFH-Kommunikationsverbindungen ist in der Figur 1 dargestellt.

Das System besteht aus folgenden Elementen:
- zwei Ankopplungsvorrichtungen 19 und 20, die netzseitig miteinander einerseits über die Phasenleitung L1 einer dreiphasigen Hochspannungsleitung I und andererseits über eine Erdverbindung verbunden sind;
- zwei TFH-Vorrichtungen 14 (TFH-Signalsender) und 25 (TFH-Signalempfänger);
- zwei Schutzsignalisierungsvorrichtungen 10 (Schutzsignalsendevorrichtung) und 29 (Schutzsignalempfangsvorrichtung);
- einer Signalisierungssendevorrichtung 12, die mit dem TFH-Signalsender 14 und der Schutzvorrichtung 10 verbunden ist;
- einer Signalisierungsempfangsvorrichtung 27, die mit der TFH-Einrichtung 25 und der Schutzsignalempfangsvorrichtung 29 verbunden ist;
- einem Frequenzmultiplexer 17, der mit Ankopplungsvorrichtung 19, der TFH-Einrichtung 14 und der Signalisierungssendevorrichtung 12 verbunden ist;
- einem Frequenzdemultiplexer 22, der mit Ankopplungsvorrichtung 20 und mit der TFH-Einrichtung 25 und der Signalisierungsempfangsvorrichtung 27 verbunden ist.

Der zu übertragene Datenstrom 6 wird im TFH-Signalsender 14 verarbeitet und als zusendendes Signal 15 über die primären Frequenzkanäle mit einer Mittenfrequenzen f1.1 bis f1.N mit den jeweiligen Teilsignalamplituden A1 (siehe Fig. 2) über den Frequenzmultiplexer 17, die Ankopplungsvorrichtung 19, die Hochspannungsleitung L1, Ankopplungsvorrichtung 20 und den Frequenzdemultiplexer 22 als Empfangssignal 23 an den TFH-Signalempfänger 25 herangeführt, der nach einer Verarbeitung im TFH-Signalempfänger 25 dem empfangenen Datenstrom 8 entspricht.

Im Ruhezustand (über die Schnittstelle wurde keine Schutzmeldung 7 empfangen) sendet die Schutzsignalsendevorrichtung 10 ein unmoduliertes Schutzsignal 11 mit einer Mittenfrequenz f2.1 und einer Amplitude A2 (vgl. Figur 2) in einem sekundären Frequenzkanal.

In der Signalisierungssendevorrichtung 12 wird das Schutzsignal 11 abhängig von einer der Pimärkanalkennmeldung 13 per frequency shift keying (FSK) moduliert, indem die Mittenfrequenz des Schutzsignals beispielsweise von f2.1 auf maximal f2.2 verschoben wird (Figur 2). Das modulierte Kombinationssignal 16 wird dem zweiten Eingang des Frequenzmultiplexers 17 zugeführt und über die Ankopplungsvorrichtung 19 über die Leitung L1 an das Empfangsgerät 4 übermittelt.

Dort wird in der Signalisierungsempfangsvorrichtung 27 das Signal 24 hinsichtlich seiner Frequenz bewertet und für den TFH-Signalempfänger demoduliert. Hat das Signal 24 annähernd die Frequenz f2.1 oder f2.2, so wird es zu der Pimärkanalkennmeldung 26 FSK-demoduliert, die an den TFH-Signalempfänger 25 übergeben wird. Zusätzlich leitet die Signalisierungsempfangsvorrichtung 27 das Signal 24 als Signal 28 an die Schutzsignalempfangsvorrichtung 29, in der es hinsichtlich seiner Frequenz bewertet wird. Wenn die Frequenz von Signal 28 kleiner ist als 0,5*(f2.2 + f2.3), so wird es für Schutzsignalempfangsvorrichtung 29 als einen Ruhezustand anzei-gend interpretiert.

Dagegen wird das Signal 28, bei Vorliegen einer Frequenz größer als 0,5* (f2.2 + f2.3) als ein Schutzsignal interpretiert und von der Schutzsignalempfangsvorrichtung 29 als Schutzauslösesignal 9 ausgegeben.

Aufgrund der in den Pimärkanalkennmeldungen (Signale 13, 26) enthaltenen Informationen kann der TFH-Signalsender 14 dem TFH-Signalempfänger 25 die Parameter der TFH-Signal- und Datenübertragung zwischen den Einheiten 4,5 mitteilen oder diese anpassen. Dabei kann es sich bei den Primärkanalkennmeldungen beispielsweise um eine Anzahl von primären Frequenzkanälen und deren Frequenz, den jeweiligen Sendepegel, verwendete Modulations-/Codierungsart, Identifikationsnummer des TFH-Senders und des ihm zugeordneten TFH-Empfängers, Art der Kanalnutzung (Duplex, Halbduplex, Simplex) handeln. Außerdem können zwischen der Einheiten 4,5 mittels der Pimärkanalkennmeldungen zusätzliche Informationen wie z. b.: Zeitzeichen, Statusinformationen, Absichten für eine Verbreiterung/Schrumpfung des genutzten Frequenzbandes u. Ä. übertragen werden.

In einem weiteren Ausführungsbeispiel der Erfindung findet die eingangs erläuterte Übertragung der TFH-Signale über die primären Frequenzkanäle (bzw. der Primärkanalmeldungen und der Schutzsignale über die sekundären Frequenzkanäle) in beide Richtungen zwischen den Einheiten 4,5 statt. Die Daten werden über die Stromleitung folglich bidirektional ausgetauscht. Dafür können beispielsweise die primären und sekundären Frequenzkanäle beider Einheiten 4,5 in verschiedenen, eventuell verschachtelten, Frequenzbereichen platziert werden. Dies würde neben der bidirektionalen Übertragung zwischen den Einheiten 4,5 über die jeweils primären Frequenzkanäle einen bidirektionalen Austausch der Pimärkanalkennmeldungen über die sekundären Frequenzkanäle und somit eine Möglichkeit eine Rückmeldung vom THF-Signalempfänger 25 zum TFH-Signalsender 14 über die Empfangsqualität in den jeweiligen primären und sekundären Frequenzkanälen ermöglichen. Die Rückmeldung kann beispielsweise Informationen zum Empfangspegel, Signal-Rausch-Verhältnis, geschätzter Bitfehlerrate je Frequenzkanal u. Ä. enthalten.

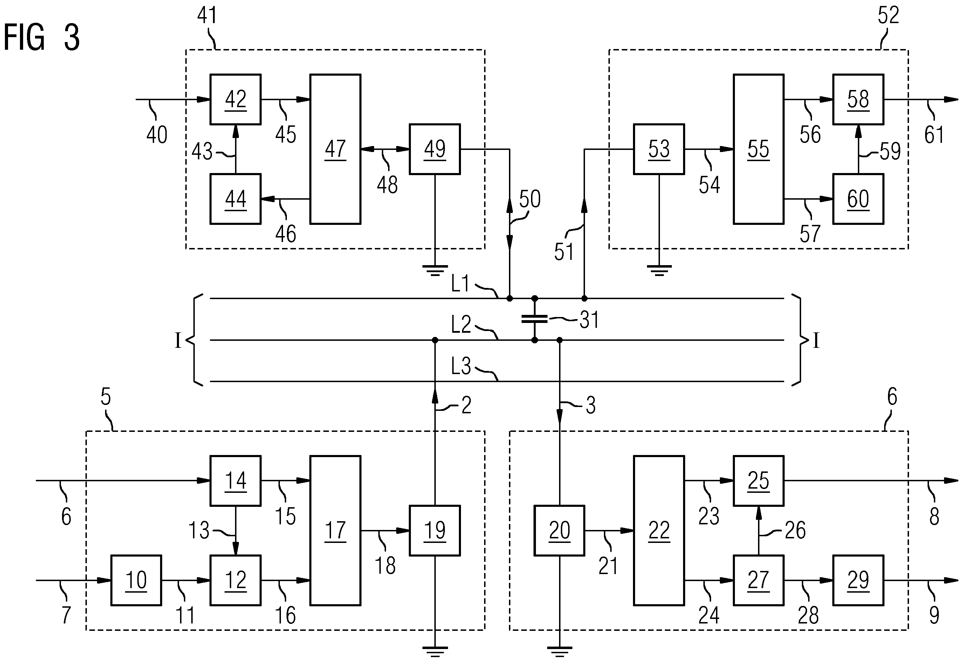

Die Figur 3 stellt ein weiteres Ausführungsbeispiel der Erfindung dar, in der im Vergleich zum System gemäß Figur 1 zwei weitere TFH-Vorrichtungen 41,52 dargestellt sind. Diese weisen folgenden Einrichtungen auf:
- zwei zusätzliche Ankopplungsvorrichtungen 49,53, die netzseitig miteinander einerseits über die Phasenleitung L1 einer dreiphasigen Hochspannungsleitung I und andererseits über eine Erdverbindung verbunden sind;
- zwei zusätzliche TFH-Vorrichtungen 42 (TFH-Signalsender) und 58 (TFH-Signalempfänger);
- einer Signalisierungsempfangsvorrichtung 44, die mit dem TFH-Signalsender 42 verbunden ist;
- einer Signalisierungsempfangsvorrichtung 60, die mit dem TFH-Signalempfänger 58 verbunden ist;
- einem bidirektionalen Frequenzmultiplexer 47, der mit einer Ankopplungsvorrichtung 49, dem TFH-Signalsender 42 und der Signalisierungsempfangsvorrichtung 44 verbunden ist;
- einem Frequenzdemultiplexer 55, der mit Ankopplungsvorrichtung 53, dem TFH-Signalempfänger 58 und der Signalisierungsempfangsvorrichtung 60 verbunden ist.

Der zu übertragene Datenstrom 40 wird im TFH-Signalsender 42 verarbeitet und als das zusendende Signal 45 über die primären Frequenzkanäle mit Mittenfrequenzen f3.1 bis f3.N, die verschieden sind von den primären Frequenzkanälen mit einer Mittenfrequenzen f1.1 bis f1.N (genutzt von den Einheiten 5,6), über den bidirektionalen Frequenzmultiplexer 47, die Ankopplungsvorrichtung 49, die Hochspannungsleitung L1, Ankopplungsvorrichtung 53 und den Frequenzdemultiplexer 55 als Empfangssignal 56 an den TFH-Signalempfänger 58 herangeführt. Der TFH-Signalempfänger 58 verarbeitet das Signal 56 zu dem empfangenen Datenstrom 61. Das Sendesignal 2 der Einheit 5 kann aufgrund eines Übersprechens und/oder einer parasitären Kapazität 31 zwischen den parallel verlaufenden Hochspannungsleitungen L1,L2,L3 von der Leitung L2 in die Leitung L1 induziert bzw. eingekoppelt werden. Somit breitet sich das Sendesignal 2 auch über die Hochspannungsleitung L1, jeweils über die beiden Ankopplungsvorrichtungen 49, 53, über den bidirektionalen Frequenzmultiplexer 47 bzw. den Frequenzdemultiplexer 55 bis zu den Signalisierungsempfangsvorrichtungen 44 bzw. 60 aus.

In den Signalisierungsempfangsvorrichtungen 44,60 werden die Signale 46 bzw. 57 hinsichtlich der Frequenzanteile f2.1 oder f2.2 bewertet und demoduliert. Enthält das Signal 46 und/oder das Signal 57 annähernd die Frequenz f2.1 oder f2.2, so wird es FSK-demoduliert und als Pimärkanalkennmeldung 43 bzw. 59 jeweils ergänzt mit weiteren SignalempfangsqualitätsInformationen für die Frequenzen f3.1 bis f3.N , f2.1 und f2.2 (z. B.: Empfangspegel, Signal-Rausch-Verhältnis, geschätzte Bitfehlerrate u. Ä.) an die TFH-Vorrichtungen 42 bzw. 58 übergeben.

Aufgrund der in den Pimärkanalkennmeldungen 43 und 59 enthaltenen Informationen können der TFH-Signalsender 42 bzw. TFH-Signalempfänger 58 die TFH-Signalübertragung zwischen den Einheiten 41 und 52 so anpassen, dass diese die TFH-Signalübertragung zwischen den Einheiten 5 und 6 nicht stört. D. h., der TFH-Signalsender 42 bzw. TFH-Signalempfänger 58 werden für deren Signalübertragung andere Frequenzen für die primären Frequenzkanäle verwenden als solche in den Einheiten 5 und 6.

Alternativ werden die gleichen Frequenzen nur dann wiederverwendet, wenn es eine ausreichend große Signaldämpfung zwi-schen dem TFH-Signalsender 14 und dem TFH-Signalempfänger 58 vorhanden ist.

In einer Weiterbildung dieses Systems findet die eingangs beschriebene bidirektionale Übertragung der TFH-Signale über die primären Frequenzkanäle bzw. der Primärkanalmeldungen über die sekundären Frequenzkanäle sowohl zwischen den Einheiten 5,6 als auch zwischen den Einheiten 41,52 statt.

Auch in dieser Variante können beispielsweise die primären und sekundären Frequenzkanäle aller vier Einheiten 5,6,41,52 in verschiedenen und eventuell verschachtelten Frequenzbereichen platziert werden. Dies würde neben der bidirektionalen Übertragung zwischen den Einheiten 5 und 6 sowie zwischen den Einheiten 41 und 52 über die jeweils primären Frequenzkanäle, wenn möglich, einen bidirektionalen Austausch der Pimärkanalkennmeldungen mittels der sekundären Frequenzkanäle zwischen allen vier Einheiten 5,6,41,52 und somit eine Möglichkeit eine Rückmeldung von jedem THF-Signalempfänger aller vier Einheiten zu allen anderen TFH-Signalsender ermöglichen. Die Rückmeldung könnte beispielsweise über die Empfangsqualität in den jeweiligen oder allen primären und allen sekundären Frequenzkanälen (z. B.: Empfangspegel, Signal-Rausch-Verhältnis, geschätzte Bitfehlerrate je Frequenzkanal und je Identifikationsnummer der jeweiligen Einheit u. Ä.) informieren.

Aufgrund der in den wechselseitig ausgetauschten Pimärkanalkennmeldungen enthaltenen Informationen können der TFH-Signalsender 42 bzw. TFH-Signalempfänger 58 die TFH-Signalübertragung zwischen den Einheiten 41 und 52 so anpassen, dass diese die TFH-Signalübertragung zwischen den Einheiten 5 und 6 nicht stört. D. h., der TFH-Signalsender 42 bzw. TFH-Signalempfänger 58 werden für die Signalübertragung entweder andere Frequenzen für die primären Frequenzkanäle verwenden als solche in den Einheiten 5 und 6 oder die gleichen Frequenzen nur dann wieder verwenden, wenn es eine ausreichend große Signaldämpfung zwischen dem TFH-Signalsender 14 und dem TFH-Signalempfänger 58) und zwischen dem TFH-Signalsender 42 und dem TFH-Signalempfänger 25 vorhanden ist.

Das oben beschriebene Verfahren erlaubt die sonst nur für die Schutzbefehlsübertragung genutzten sekundären Frequenzkanäle auch für die robustere, da mit erhöhter Leistung, Übertragung von Zusatzinformationen zur automatischen Signalisierung, Steuerung und /oder Anpassung der Übertragung von Sprache und Fernwirknachrichten über die primären Frequenzkanäle zu nutzen und diese an die Partner-TFH-Vorrichtung, aber insb. an die anderen TFH-Vorrichtungen zu senden, die mit der sendenden TFH-Vorrichtung auch nicht elektrisch verbunden sein können. Dadurch können die primären Frequenzkanäle effektiver für ihren Hauptzweck genutzt werden sowie deren Platzierung im Frequenzbereich dynamisch angepasst werden.

## Patentansprüche

1. Verfahren zur Datenübertragung über eine Hoch- oder Mittelspannungsleitung (I), bei dem ein Schutzsignal-Frequenzkanal für die Übertragung eines Schutzsignals (11) reserviert ist, und primäre Frequenzkanäle zur Datenübertagung verwendet werden, **dadurch gekennzeichnet, dass** der Schutzsignal-Frequenzkanal zusätzlich zur Übertragung von Zusatzdaten (13, 26) genutzt wird, und dass als Zusatzdaten eine Primärkanalkennmeldung (13, 26), die verfügbare primäre Frequenzkanäle festlegt, übertragen wird, wobei die Zusatzdaten (13, 26) mit dem Schutzsignal (11) kombiniert werden.

2. Verfahren nach Anspruch 1, **dadurch gekennzeichnet, dass** der Schutzsignal-Frequenzkanal mit einer höheren Sendeamplitude (A2) als der jeweiligen Sendeamplitude (A1) der primären Frequenzkanäle betrieben wird.

3. Verfahren nach einem der vorhergehenden Ansprüche, **dadurch gekennzeichnet, dass** als Zusatzdaten (13, 26) Signalempfangsqualitätsinformationen übertragen werden, die mindestens eine der folgenden Informationen aufweisen: Empfangspegel, Signal-zu-Rauschen Verhältnis, Bitfehlerrate.

4. Verfahren nach einem der vorhergehenden Ansprüche, **dadurch gekennzeichnet, dass** die Datenübertragung über eine erste Phase (L1) der Hoch- oder Mittelspannungsleitung (I) erfolgt.

5. Verfahren nach Anspruch 4, **dadurch gekennzeichnet, dass** eine weitere Datenübertragung über eine zweite Phase (L2) der Hoch- oder Mittelspannungsleitung (I) erfolgt, wobei ein Übersprechen der Datenkommunikation zwischen beiden Phasen (L1, L2) erfolgt, und dass auf beiden Phasen (L1, L2) verfügbare primäre Frequenzkanäle derart festlegt werden, dass keine Störung der jeweils anderen Phase (L1, L2) bei der Datenübertagung entsteht.

6. Verfahren nach einem der vorhergehenden Ansprüche, **dadurch gekennzeichnet, dass** für den Schutzsignal-Frequenzkanal als Datenübertragungsmethode frequency shift keying eingesetzt wird, wobei Signale (24) außerhalb eines vorher festgelegten Frequenzbereichs als ein Schutzsignal (11) und Signale (24) innerhalb des vorher festgelegten Frequenzbereichs als Zusatzdaten (26) verarbeitet werden.

7. System zur Datenübertragung über eine Hoch- oder Mittelspannungsleitung (I) mit einer Sendeanordnung (5) und einer Empfangsanordnung (4), die jeweils eine Schutzsignalisierungseinrichtung (10, 29) zur Übertragung eines Schutzsignals (11) über einen Schutzsignal-Frequenzkanal und eine Signalisierungseinrichtung (14, 25) zur Übertragung von Daten (6, 8) über primäre Frequenzkanäle aufweisen, **dadurch gekennzeichnet, dass** die Sendeanordnung (5) und die Empfangsanordnung (4) dafür ausgebildet sind, den Schutzsignal-Frequenzkanal zusätzlich zur Übertragung von Zusatzdaten (13, 26) zu nutzen und als Zusatzdaten eine Primärkanalkennmeldung (13, 26), die verfügbare primäre Frequenzkanäle mitteilt, zu übertragen, wobei die Zusatzdaten (13, 26) mit dem Schutzsignal (11) kombiniert werden.

8. System nach Anspruch 7, **dadurch gekennzeichnet, dass** die Sendeanordnung (5) dafür ausgebildet ist, den Schutzsignal-Frequenzkanal mit einer höheren Sendeamplitude (A2) als der jeweiligen Sendeamplitude (A1) der primären Frequenzkanäle zu betreiben.

9. System nach Anspruch 7, **dadurch gekennzeichnet, dass** die Sendeanordnung (5) und die Empfangsanordnung (4) dafür ausgebildet sind, als Zusatzdaten (13, 26) eine Signalempfangsqualitätsinformationen zu übertragen, die mindestens eine der folgenden Informationen aufweist: Empfangspegel, Signal-zu-Rauschen Verhältnis, Bitfehlerrate.

10. System nach einem der Ansprüche 7 bis 9, **dadurch gekennzeichnet, dass** die Sendeanordnung (5) und die Empfangsanordnung (4) zur Datenübertragung über eine erste Phase (L1) der Hoch- oder Mittelspannungsleitung (I) ausgebildet sind.

11. System nach Anspruch 10, **dadurch gekennzeichnet, dass** eine weitere Sendeanordnung (41) und eine weitere Empfangsanordnung (52) für eine weitere Datenübertragung über eine zweite Phase (L2) der Hoch- oder Mittelspannungsleitung vorgesehen sind, wobei alle Sende- und Empfangsanordnungen (4, 5, 41, 52) derart ausgebildet sind, dass bei einem Übersprechen der Datenkommunikation zwischen beiden Phasen (L1, L2) verfügbare primäre Frequenzkanäle für beide Phasen (L1, L2) derart festlegt werden, dass keine Störung der jeweils anderen Phase (L1, L2) bei der Datenübertagung entsteht.

12. System nach einem der Ansprüche 7 bis 11, **dadurch gekennzeichnet, dass** die Sendeanordnung und die Empfangsanordnung (4, 5, 41, 52) in einer Kommunikationseinrichtung zusammengefasst sind, so dass zwischen zwei Kommunikationseinrichtungen eine bidirektionale Kommunikation möglich ist.

13. System nach einem der Ansprüche 7 bis 12, **dadurch gekennzeichnet, dass** die Sendeanordnung (5, 41) ausgebildet ist, für den Schutzsignal-Frequenzkanal als Datenübertragungsmethode frequency shift keying einzusetzen und dass die Empfangsanordnung (4, 52) ausgebildet ist, Signale (24) außerhalb eines vorher festgelegten Frequenzbereichs als ein Schutzsignal (11) und Signale (24) innerhalb des vorher festgelegten Frequenzbereichs als Zusatzdaten (26) zu verarbeiten.

## Claims

1. Method for data transmission over a high or medium voltage line (I), in which a protection signal frequency channel is reserved for the transmission of a protection signal (11), and primary frequency channels are used for data transmission, **characterised in that** the protection signal frequency channel is additionally used to transmit additional data (13, 26), and that a primary channel indicator (13, 26), which fixes available primary frequency channels, is transmitted as additional data, wherein the additional data (13, 26) is combined with the protection signal (11).

2. Method according to claim 1, **characterised in that** the protection signal frequency channel is operated with a higher transmit amplitude (A2) than the respective transmit amplitude (A1) of the primary frequency channels.

3. Method according to one of the preceding claims, **characterised in that** signal receive quality information which has at least one of the following items of information: receive level, signal-to-noise ratio, bit error rate, is transmitted as additional data (13, 26).

4. Method according to one of the preceding claims, **characterised in that** the data transmission takes place over a first phase (L1) of the high or medium voltage line (I).

5. Method according to claim 4, **characterised in that** a further data transmission takes place over a second phase (L2) of the high or medium voltage line (I), wherein a data communication crosstalk takes place between both phases (L1, L2) and that available primary frequency channels are fixed on both phases (L1, L2) so that no interference occurs in the respective other phase (L1, L2) during data transmission.

6. Method according to one of the preceding claims, **characterised in that** frequency shift keying is used as a data transmission method for the protection signal frequency channel, wherein signals (24) outside of a previously fixed frequency range are processed as a protection signal (11) and signals (24) within the previously fixed frequency range are processed as additional data (26).

7. System for data transmission over a high or medium voltage line (I) with a transmit arrangement (5) and a receive arrangement (4), each of which has a protection signalling device (10, 29) for transmitting a protection signal (11) over a protection signal frequency channel and a signalling device (14, 25) for transmitting data (6, 8) over primary frequency channels, **characterised in that** the transmit arrangement (5) and the receive arrangement (4) are embodied to use the protection signal frequency channel additionally to transmit additional data (13, 26) and as additional data to transmit a primary channel indicator (13, 26) which communicates available primary frequency channels, wherein the additional data (13, 26) is combined with the protection signal (11).

8. System according to claim 7, **characterised in that** the transmit arrangement (5) is embodied to operate the protection signal frequency channel with a higher transmit amplitude (A2) than the respective transmit amplitude (A1) of the primary frequency channels.

9. System according to claim 7, **characterised in that** the transmit arrangement (5) and the receive arrangement (4) are embodied to transmit an item of signal receive quality information as additional data (13, 26), which has at least one of the following items of information: receive level, signal-to-noise ratio, bit error rate.

10. System according to one of claims 7 to 9, **characterised in that** the transmit arrangement (5) and the receive arrangement (4) are embodied to transmit data over a first phase (L1) of the high or medium voltage line (I).

11. System according to claim 10, **characterised in that** a further transmit arrangement (41) and a further receive arrangement (52) are provided for a further data transmission over a second phase (L2) of the high or medium voltage line, wherein all transmit and receive arrangements (4, 5, 41, 52) are embodied so that with a data communication crosstalk between both phases (L1, L2), available primary frequency channels are fixed for both phases (L1, L2) so that there is no interference with the respective other phase (L1, L2) during the data transmission.

12. System according to one of claims 7 to 11, **characterised in that** the transmit arrangement and the receive arrangement (4, 5, 41, 52) are combined in a communication device so that bidirectional communication is possible between two communication devices.

13. System according to one of claims 7 to 12, **characterised in that** the transmit arrangement (5, 41) is embodied to use frequency shift keying as a data transmission method for the protection signal frequency channel and that the receive arrangement (4, 52) is embodied to process signals (24) outside of a previously fixed frequency range as a protection signal (11) and signals (24) within the previously fixed frequency range as additional data (26).

## Revendications

1. Procédé pour la transmission de données sur une ligne moyenne ou haute tension (I), dans lequel un canal de fréquence de signal de protection est réservé pour la transmission d'un signal de protection (11) et des canaux de fréquences primaires sont utilisés pour la transmission de données, **caractérisé en ce que** le canal de fréquence de signal de protection est utilisé additionnellement pour la transmission de données supplémentaires (13, 26) et **en ce qu'**est transmise, en tant que données supplémentaires un message d'identification de canal primaire (13, 26) qui détermine des canaux de fréquences primaires disponibles, les données supplémentaires (13, 26) étant combinées avec le signal de protection (11).

2. Procédé selon la revendication 1, **caractérisé en ce que** le canal de fréquence de signal de protection est exploité avec une amplitude d'émission (A2) supérieure à l'amplitude d'émission respective (A1) des canaux de fréquences primaires.

3. Procédé selon l'une des revendications précédentes, **caractérisé en ce que** sont transmises, en tant que données supplémentaires (13, 26), des informations de qualité de réception de signal qui comportent au moins une des informations suivantes : niveau de réception, rapport signal-bruit, taux d'erreur sur les bits.

4. Procédé selon l'une des revendications précédentes, **caractérisé en ce que** la transmission de données se fait via une première phase (L1) de la ligne moyenne ou haute tension (I) .

5. Procédé selon la revendication 4, **caractérisé en ce qu'**une autre transmission de données a lieu sur une deuxième phase (L2) de la ligne moyenne ou haute tension (I), une diaphonie de la communication de données entre les deux phases (L1, L2) se produisant, et **en ce que** des canaux de fréquences primaires disponibles sont déterminés de manière telle, sur les deux phases (L1, L2), qu'aucune perturbation de l'autre phase respective (L1, L2) ne se produit lors de la transmission de données.

6. Procédé selon l'une des revendications précédentes, **caractérisé en ce que** le frequency shift keying est utilisé en tant que méthode de transmission de données pour le canal de fréquence de signal de protection, des signaux (24) en dehors d'une plage de fréquence déterminée préalablement étant traités en tant que signal de protection (11) et des signaux (24) à l'intérieur de la plage de fréquence déterminée préalablement étant traités en tant que données supplémentaires (26).

7. Système de transmission de données sur une ligne moyenne ou haute tension (I), avec un ensemble d'émission (5) et un ensemble de réception (4) qui comportent respectivement un dispositif de signalisation de protection (10, 29) pour la transmission d'un signal de protection (11) sur un canal de fréquence de signal de protection et un dispositif de signalisation (14, 25) pour la transmission de données (6, 8) sur des canaux de fréquences primaires, **caractérisé en ce que** l'ensemble d'émission (5) et l'ensemble de réception (4) sont conçus pour utiliser le canal de fréquence de signal de protection additionnellement pour la transmission de données supplémentaires (13, 26) et pour transmettre, en tant que données supplémentaires, un message d'identification de canal primaire (13, 26) qui communique des canaux de fréquences primaires disponibles, les données supplémentaires (13, 26) étant combinées avec le signal de protection (11).

8. Système selon la revendication 7, **caractérisé en ce que** l'ensemble d'émission (5) est conçu pour exploiter le canal de fréquence de signal de protection avec une amplitude d'émission (A2) supérieure à l'amplitude d'émission respective (A1) des canaux de fréquences primaires.

9. Système selon la revendication 7, **caractérisé en ce que** l'ensemble d'émission (5) et l'ensemble de réception (4) sont conçus pour transmettre, en tant que données supplémentaires (13, 26), des informations de qualité de réception de signal qui comportent au moins une des informations suivantes : niveau de réception, rapport signal-bruit, taux d'erreur sur les bits.

10. Système selon l'une des revendications 7 à 9, **caractérisé en ce que** l'ensemble d'émission (5) et l'ensemble de réception (4) sont conçus pour la transmission de données via une première phase (L1) de la ligne moyenne ou haute tension.

11. Système selon la revendication 10, **caractérisé en ce que** sont prévus un autre ensemble d'émission (41) et un autre ensemble de réception (52) pour une autre transmission de données via une deuxième phase (L2) de la ligne moyenne ou haute tension, tous les ensembles d'émission et de réception (4, 5, 41, 52) étant conçus de telle sorte qu'en cas de diaphonie de la communication de données entre les deux phases (L1, L2) des canaux de fréquences primaires disponibles sont déterminés de manière telle, pour les deux phases (L1, L2), qu'aucune perturbation de l'autre phase respective (L1, L2) ne se produit lors de la transmission de données.

12. Système selon l'une des revendications 7 à 11, **caractérisé en ce que** l'ensemble d'émission et l'ensemble de réception (4, 5, 41, 52) sont regroupés dans un dispositif de communication, de sorte qu'une communication bidirectionnelle est possible entre deux dispositifs de communication.

13. Système selon l'une des revendications 7 à 12, **caractérisé en ce que** l'ensemble d'émission (5, 41) est conçu pour utiliser le frequency shift keying en tant que méthode de transmission de données pour le canal de fréquence de signal de protection et **en ce que** l'ensemble de réception (4, 52) est conçu pour traiter en tant que signal de protection (11) des signaux (24) en dehors d'une plage de fréquence déterminée préalablement et en tant que données supplémentaires (26) des signaux (24) à l'intérieur de la plage de fréquence déterminée préalablement.
